# EUROPEAN PATENT APPLICATION

(11) **EP 1 528 831 A1**
(43) Date of publication of application: **04.05.2005**
(21) Application number: 02743862.1
(22) Date of filing: 09.07.2002
(51) Int. Cl.: H04Q 7/38, H04L 1/08, H04J 13/00

(54) **COMMUNICATION SYSTEM; TRANSMITTER; RECEIVER; AND TRANSMITTING RECEIVING METHOD**

(71) Applicant: FUJITSU LIMITED, Kawasaki-shi, Kanagawa 211-8588 (JP)
(72) Inventor: Ohno, Masahiro, FJ Mobile Core Techn. Co., Ltd., Kawasaki-shi, Kanagawa 211-8588 (JP); Suzuki, Shinichi, FJ Mobile Core Techn. Co., Ltd., Kawasaki-shi, Kanagawa 211-8588 (JP); Uchishima, Makoto, FJ Mobile Core Techn. Co., Ltd., Kawasaki-shi, Kanagawa 211-8588 (JP)
(74) Representative: HOFFMANN - EITLE
(86) International application number: PCT/JP2002/006925
(87) International publication number: WO 2004/006609

(57) **Abstract**

Transmit data of every transmission time interval on each channel is segmented at a frame period to obtain frame data, the frame data on each channel is multiplexed and transmitted and identification information (TFCI), which specifies a combination of frame data lengths on each channel, is transmitted frame by frame. In this case, all identification information of all frames in a maximum transmission time interval is made identical and transmitted. If identification information is not the same in all frames of the maximum transmission time interval on the receiving side, then it is construed that an error has occurred and the true identification information is decided by majority rule.

## Description

### Technical Field

This invention relates to a communication system, a transceiver apparatus and a transceiving method. More particularly, the invention relates to a communication system, a transceiver apparatus and a transceiving method in which transmit data of every transmission time interval on each channel is segmented at a frame period to obtain frame data, the frame data on each channel is multiplexed and transmitted, and identification information, which specifies a combination of frame data lengths on each channel is transmitted frame by frame.

### Background Art

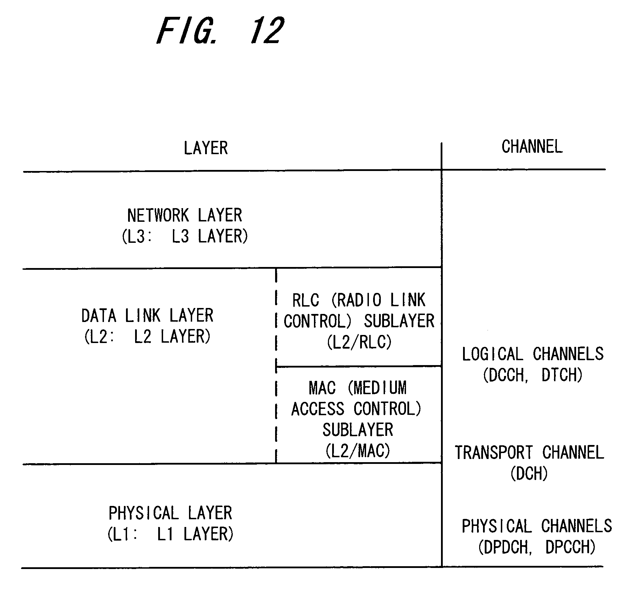

Fig. 12 is a diagram useful in describing the protocol architecture of a radio interface in a W-CDMA system. The architecture includes three protocol layers, namely a physical layer (Layer 1), a data link layer (Layer 2) and a network layer (Layer 3). Layer 2 is further divided into a MAC (Medium Access Control) sublayer and an RLC (Radio Link Control) sublayer.

The channels of this radio interface are arranged in three hierarchical levels, namely physical channels, a transport channel and logical channels. These are classified according to the function and logical characteristics of the transmitted signal and are characterized by the information content transferred. The logical channels related to this invention are the dedicated control channel DCCH (Dedicated Control Channel) and the dedicated traffic channel DTCH (Dedicated Traffic Channel). The transport channel is a channel provided to the MAC sublayer from the physical layer. There are transport channels of a plurality of types in order to transmit data of different characteristics and forms on the physical layer. The transport channel related to this invention is a dedicated channel DCH (Dedicated Channel). The dedicated channel DCH is a bidirectional channel used in transmission of user data and is assigned individually to each mobile station. The physical channels are classified taking the function of the physical layer into consideration and are specified by spreading codes and frequency carriers, etc. The physical channels related to this invention are the dedicated physical channels DPCH (Dedicated Physical Channel). Dedicated physical channels DPCH include a dedicated physical data channel DPDCH (Dedicated Physical Data Channel) and a dedicated physical control channel DPCCH (Dedicated Physical Control Channel).

The mapping of the logical channels (DTCH, DCCH) to the transport channel is carried out in the MAC sublayer, and the mapping of the transport channel to the physical channel is carried out in the physical layer.

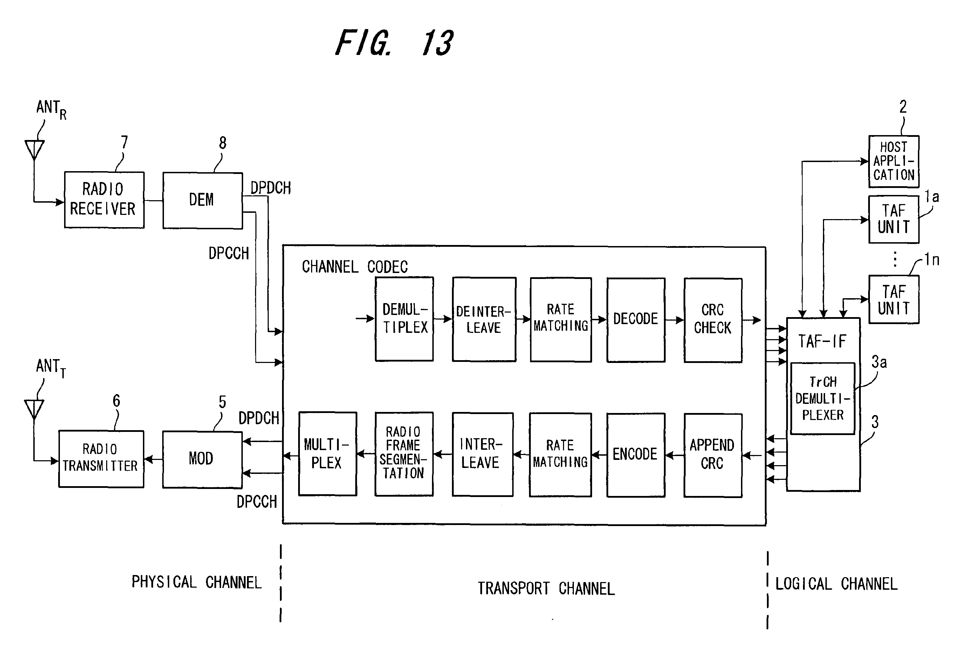

Fig. 13 is a block diagram of a mobile station. Dedicated traffic information (DTCH information) and dedicated control information (DCCH information) that has been mapped to a prescribed logical channel and transmitted from a plurality of terminal access function units (abbreviated to "TAF units" below) 1a to 1n and a host application 2 is input to a terminal access function interface (TAF IF) 3 of the MAC sublayer that separates and combines data. Information necessary for encoding processing and multiplex transmission, such as the encoding scheme of each transport channel TrCH, the TTI (Transmission Time Interval) of each TrCH and the TF (Transmission Format) of each TrCH, is reported to the TAF IF 3 from a higher layer when the dedicated physical channel DPCH is open. Furthermore, the transmission time intervals TTI stipulated in W-CDMA are 10 ms, 20 ms, 40 ms and 80 ms.

A TrCH demultiplexer 3a in the TAF IF 3 ① decides the transmit data length per TTI of each TrCH based upon the transmit bit rate of each logical channel and transmission format TF of the TrCh that corresponds to each logical channel, and ② demultiplexes the transmit data of each TrCH on a per-TTI basis and inputs the data to a channel codec 4.

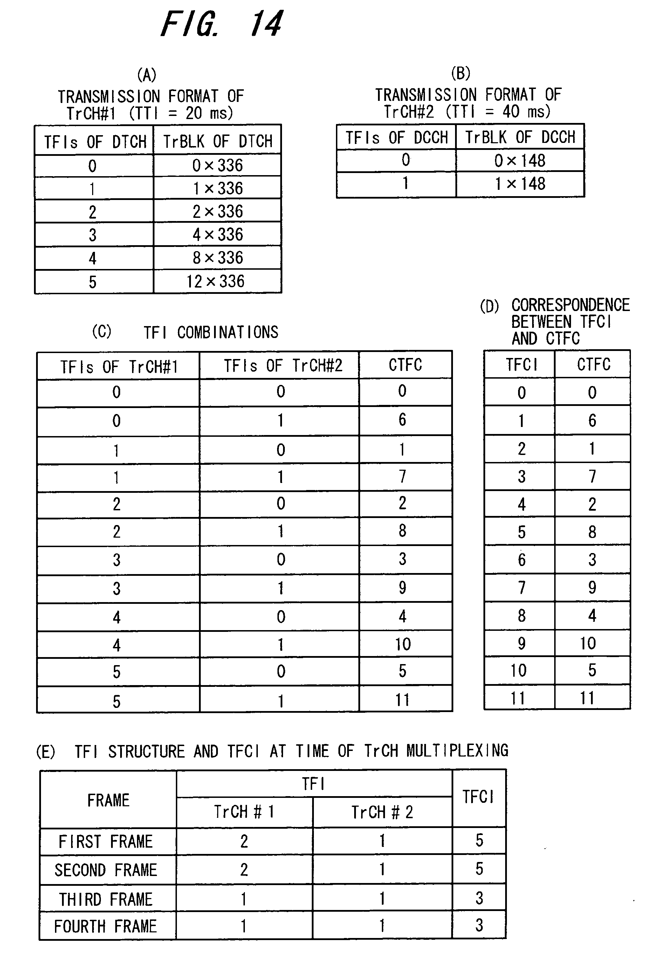

The transmission format TF indicates a plurality of bit-length candidates, each bit-length candidate per TTI of the TrCH. One example is illustrated in (A) and (B) of Fig. 14. Bit length is expressed by transport block count × block length. In Fig. 14, (A) and (B) indicate bit-length candidates per TTI of each TrCH#1, TrCH#2 in a case where dedicated traffic data (DTCH data) and dedicated control data (DCCH data) are multiplexed on TrCH#1, TrCH#2 and transmitted. Bit-length candidates per TTI on TrCH#1 for DTCH are of six types (0 to 5) and have bit lengths of 0 × 336 bits, 1 × 336 bits, 2 × 336 bits, 4 × 336 bits, 8 × 336 bits and 12 × 336 bits, respectively. Further, 0, 1, 2, 3, 4, 5 are appended as TFIs (Transmission Format Indicators). Further, bit-length candidates per TTI on TrCH#2 for DCCH are of two types (0 and 1) and have bit lengths per TTI of 0 × 148 bits and 1 × 148 bits, respectively, and 0, 1 are appended as TFIs.

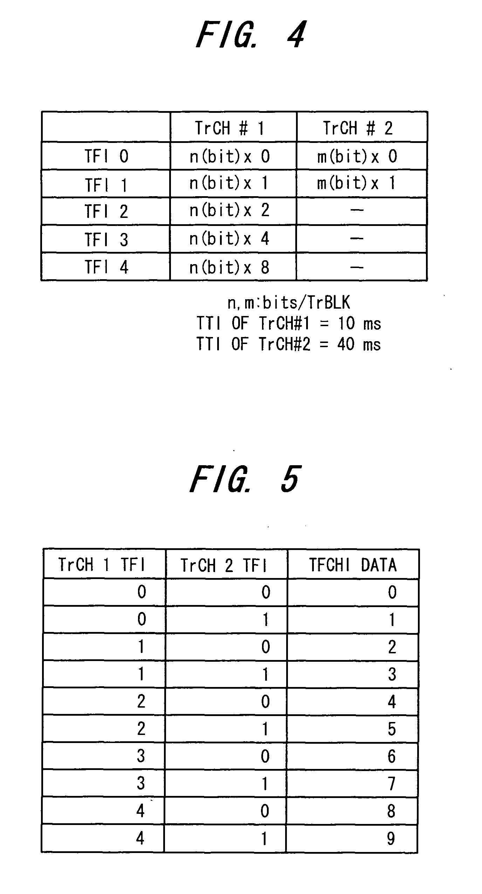

Combinations of TFIs of TrCh#1, TrCh#2 are 12 (= 6 × 2) in all, as illustrated at (C) of Fig. 14. A TrCH demultiplexer 3a calculates a CTFC (Calculated Transport Format Combination) using a prescribed calculation formula with regard to each combination and converts the calculated CTFC to a TFCI (Transmission Format Combination Indicator) using a TFCI - CTFC correspondence table illustrated at (D) of Fig. 14. For example, if the TTI of TrCH#1 is 20 ms, the TTI of TrCH#2 is 40 ms, data of 2 × 336 bits and data of 1 × 336 bits per TTI (= 20 ms) is transmitted successively from TrCH#1 and data of 1 × 148 bits per TTI (= 40 ms) is transmitted from TrCH#2, then four frames of multiplexed data every 10 ms become combinations of TFIs of the kind shown at (E) in Fig. 4. The TFCIs are indicated in the column on the right side. Though the TFCI is transmitted frame by frame, the TFCI values are the same in the period of the minimum TTI. In the example of (E) in Fig. 14, the TFCI value changes every minimum TTI = 20 ms.

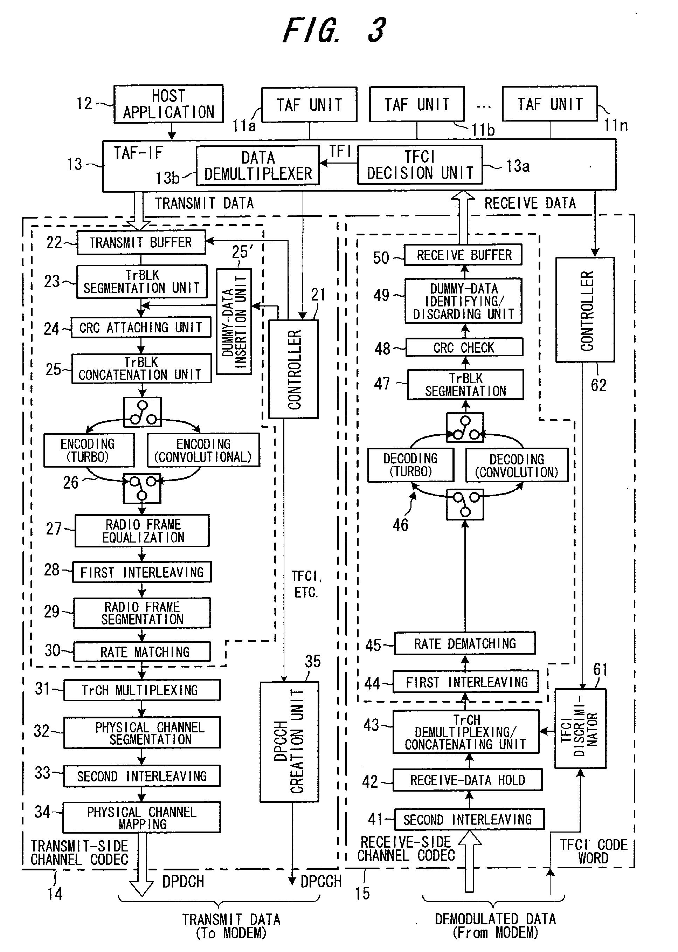

With reference again to Fig. 3, the TrCH demultiplexer 3a in the TAF IF 3 demultiplexes the data of each logical channel every TTI based upon the decided TFI of each TrCH and inputs the data to the channel codec 4. Further, the TAF IF 3 also inputs the TFCI to a channel codec 4. Further, the TAF IF 3 inputs the TFCI decided and various information received from a higher layer to the channel codec.

The channel codec 4 executes, on a per-TrCH basis, error detection encoding processing (attaching of CRC), error correction encoding processing, rate matching, primary interleaving and radio frame segmentation processing, etc.

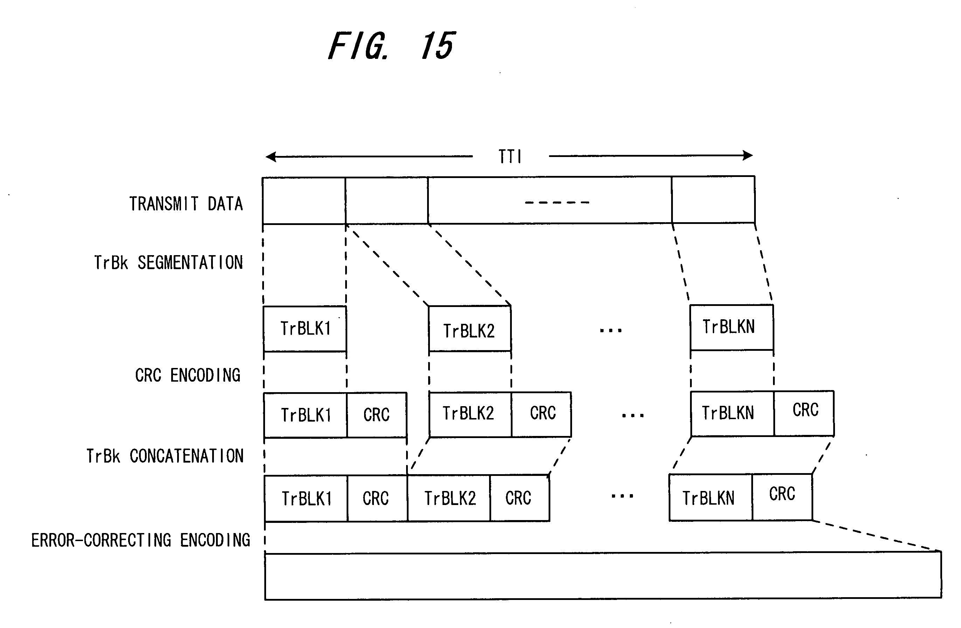

Encoding processing, which will be described with reference to Fig. 15, is executed as follows: If a plurality (N) of transport blocks TrBLK exist in a transmission time interval (TTI), the channel codec 4 generates a CRC (Cyclic Redundancy Code) error-detecting code for every transport block TrBLK and adds this onto the transmit data, concatenates the N-number of transport blocks TrBLK having the attached CRCs and encodes the blocks by the specified error-correcting encoding (such as convolutional coding or turbo coding).

Radio frame segmentation processing is processing for segmenting the transmit data of one TTI of each TrCH frame by frame. In the example at (E) in Fig. 14, the data of 2 × 336 bits in the initial TTI = 20 ms of TrCH#1 is segmented (2 × 336)/2 bits at a time and assigned to first and second frames, and the data of 1 × 336 bits in the next TTI = 20 ms is segmented (1 × 336)/2 bits at a time and assigned to third and fourth frames. Further, the data of 1 × 148 bits in TTI = 40 ms of TrCH#2 is segmented (1 × 148)/4 bits at a time and assigned to the first to fourth frames.

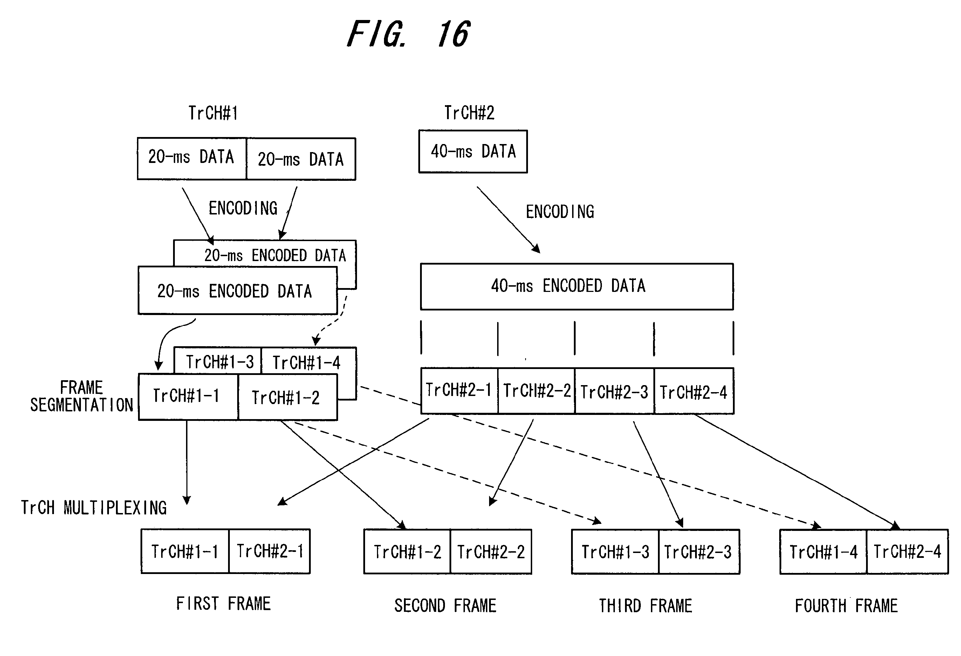

If radio frame segmentation processing is completed on each TrCH, then the multiplexer of the channel codec 4 multiplexes the transmit data of each TrCH frame by frame, executes secondary interleave processing, etc., subsequently maps the multiplexed data onto the dedicated physical data channel DPDCH of the dedicated physical channel DPCH and inputs the data to a modulator (MOD) 5 as in-phase component data at a prescribed symbol rate. Fig. 16 illustrates an example in which the two channels TrCH#1, TrCH#2 of TTI 20 ms and 40 ms are multiplexed and transmitted. In the Figure, TrCH#1-1 and TrCH#1-2 of first and second frames are the initial 20 ms of data of TrCH#1, and TrCH#1-3 and TrCH#1-4 of third and fourth frames are the next 20 ms of data of TrCH#1.

When the data of each transport channel TrCH is multiplexed, mapped to a physical channel and transmitted, the channel codec 4 appends the parameter TFCI, which indicates how the encoded data of each transport channel TrCH has been multiplexed, to the physical channel data and transmits the result in such a manner that demultiplexing can be performed correctly on the receiving side. Specifically, the channel codec 4 maps control data such as PILOT, TFCI and FBI to the dedicated physical control channel DPCCH and inputs the data to the modulator (MOD) 5 as quadrature-component data at fixed symbol rate. The TPC bits in the control data are mapped to the dedicated physical control channel DPCCH in the closed-loop controller of the MOD 5.

The modulator (MOD) 5 applies spread-spectrum modulation to the transmit data of DPDCH and control data of DPCCH using the prescribed spreading codes, applies a DA conversion and subsequently executes QPSK quadrature modulation. A radio transmitter 6 frequency-converts the quadrature-modulated signal to a high frequency, applies high-frequency amplification, etc., and transmits the resultant signal from an antenna ANT_{T}.

At the time of reception, a radio receiver 7 frequency-converts a high-frequency signal received by an antenna ANT_{R} to a baseband signal. Thereafter a demodulator (DEM) 8 subjects the baseband signal to orthogonal detection, generates in-phase (I-phase) signal of DPDCH and quadrature-phase (Q-phase) signal of DPDCH, subjects each signal to an AD conversion, applies despread processing to the I-component and Q-component data using codes identical with the spreading codes, demodulates control data (PILOT, TFCI, FBI) and receive data and inputs the results to the channel codec 4. The latter demultiplexes the received multiplexed data per transport channel TrCH based upon the TFCI, subsequently executes deinterleaving, rate matching, error-correction decoding processing and CRC check processing, etc., on a per-TrCH basis, inputs the results to the TAF IF 3 and to each TAF unit via the TAF IF.

Cases in which the TFCI cannot be decoded correctly owing to transmission error or the like arise. In such cases the multiplexed information of the TrCH can no longer be obtained and, as a result, the received multiplexed data can no longer be demultiplexed and decoded correctly for every transport channel TrCH. For example, though a TFCI is assigned frame by frame, there is the possibility that the TFCI will change every number of frames of the minimum TTI. That is, there is the possibility that the TFCI will change every number of frames conforming to the minimum TTI among frames of the number conforming to the maximum TTI. In such case, even if a TFCI value is wrong, which frame has a wrong TFCI and which frame has a correct TFCI cannot be determined. Further, in a case where a TFCI value develops an error and cannot be decoded, there is the danger that it will be processed as noise.

Accordingly, an object of the present invention is to so arrange it that even in a case where a TFCI cannot be decoded correctly owing to a transmission error or the like, a correct TFCI can be detected, thereby making it possible to decode the data of each TrCH correctly and reduce reception error.

### Disclosure of the Invention

When transmit data of every transmission time interval (TTI) on each channel is segmented at a frame period (=10mse) to obtain frame data, the frame data on each channel is multiplexed and transmitted and identification information (TFCI), which specifies a combination of frame data lengths on each channel, is transmitted frame by frame, TFCIs of all frames in the maximum transmission time interval (MAX TTI) are all made the same value and transmitted. If this arrangement is adopted, a receiver apparatus is capable of estimating a correct TFCI by majority rule even if a TFCI of a certain frame changes owing to transmission error, and is capable of demultiplexing multiplexed data correctly channel by channel based upon this TFCI.

In order that the TFCIs of all frames in the maximum transmission time interval (MAX TTI) may all be made the same value, a transmitting apparatus ① makes transmit-start timing of frame data on a channel in which the transmission time interval is shorter than the maximum transmission time interval coincide with initial frame-transmit timing in the maximum transmission time interval, and ② makes data lengths of all frames in the maximum transmission time interval identical on each of the channels. ③ In this case, if the data lengths of all frames in the maximum transmission time interval cannot be made identical on either channel and data to be transmitted does not exist in one or more frames, then the transmitting apparatus inserts dummy data into the frames to thereby makes the data lengths of all frames in the maximum transmission time interval identical.

The receiving apparatus ① performs monitoring to determine whether reception identification information (TFCI) of all frames in the maximum transmission time interval is identical; ② decides that the reception identification information is identification information, which has been transmitted from the transmitting side, if the reception identification information of all frames is identical; ③ decides by majority rule that the reception identification information is identification information, which has been transmitted from the transmitting side, if the reception identification information of all frames is not identical; ④ identifies the frame data length on each channel based upon the identification information (TFCI) decided; and ⑤ demultiplexes received demultiplexed data channel by channel based upon the frame data length. Furthermore, the receiving apparatus discards the dummy data.

### Brief Description of the Drawings

Fig. 1 is a diagram useful in describing an overview of the present invention;
Fig. 2 is another diagram useful in describing an overview of the present invention;
Fig. 3 is a diagram illustrating the principal part of a mobile station according to the present invention;
Fig. 4 illustrates an example of transmission format information TF in a case where dedicated traffic information (DTCH data) and dedicated control information (DCCH data) are multiplexed and transmitted on TrCH#1, TrCH#2;
Fig. 5 is a diagram useful in describing a TFCI table;
Fig. 6 is a first explanatory view of the present invention;
Fig. 7 is a second explanatory view of the present invention;
Fig. 8 is a diagram useful in describing MAC DATA PDU and a MAC header;
Fig. 9 is a diagram useful in describing operation of a TFCI decision unit and multiplexed-data demultiplexing/concatenating unit in a codec on a receiving side according to the present invention;
Fig. 10 is a flowchart of processing executed by a TFCI discrimination unit;
Fig. 11 is a flowchart of processing for discarding dummy data;
Fig. 12 is a diagram useful in describing the protocol architecture of a radio interface in a W-CDMA system;
Fig. 13 is block diagram of an overview of a mobile station;
Fig. 14 is a diagram useful in describing transmission format TF, CTFC and TFCI;
Fig. 15 is a diagram useful in describing processing for error-detecting encoding and error-correcting encoding; and
Fig. 16 is a diagram useful in describing TrCH multiplexing.

### Best Mode for Carrying Out the Invention

### (A) Overview of the present invention

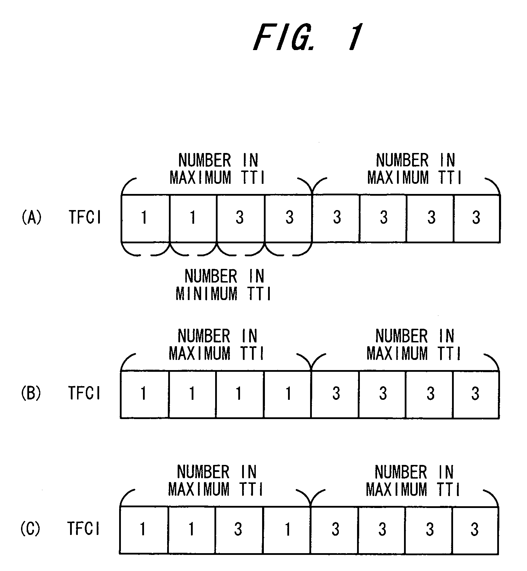

There is a possibility that a TFCI will change every number of frames that conforms to the minimum TTI. Consequently, if we focus on frames the number of which conforms to the maximum TTI, there will be cases where the TFCI changes every number of frames conforming to the minimum TTI in frame within the maximum TTI. For example, if the maximum TTI is 40 ms and the minimum TTI is 10 ms among the TTIs on each TrCH, the TFCI value changes every 10 ms (frame by frame), which is the minimum TTI, as indicated at (A) of Fig. 1. Since there is a possibility that the TFCI will thus change frame by frame, the TFCI value cannot be detected even though it changes to another value owing to transmission error. Moreover, which frame has the erroneous TFCI cannot be determined.

The present invention makes all TFCIs the same in value in frames the number (four in the Figure) of which conforms to the maximum TTI (= 40 ms), as illustrated at (B) of Fig. 1. If this arrangement is adopted, even if a TFCI is transformed owing to transmission error, as indicated at (C) in Fig. 1, it can be recognized by majority rule that an error has occurred in the third TFCI. In addition, it is possible to recognize that the correct TFCI is 1. If the correct TFCI can be determined, then error-correcting restoration becomes possible even when data contains an error, there is less susceptibility to the effects of error on a radio transmission path and communication quality is improved as a result.

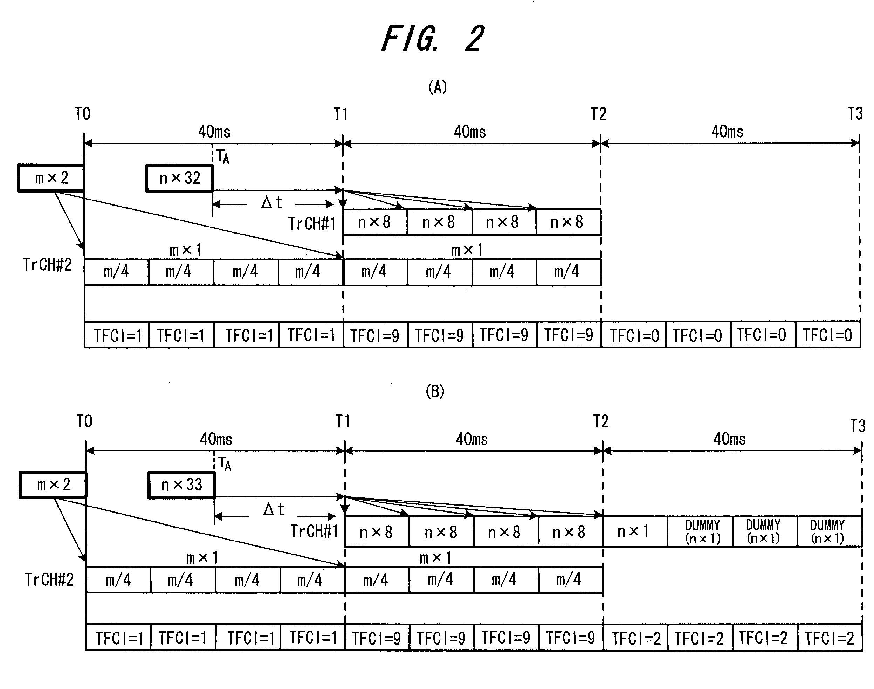

In order to make all TFCIs the same value in frames the number M (= maximum TTI/10 ms) of which conforms to the maximum TTI, operation is performed as follows: On TrCH#2 of the TTI (= 40 ms), assume that m × 2 bits of DCCH data are transmitted m × 1 at a time every 40 ms (i.e., m/4 bits at a time every frame), and assume that a request to transmit n × 32 bits of data on TrCH#1 of TTI = 10 ms has been issued at T_{A} in the course of the initial TTI (= 40 ms), as illustrated at (A) of Fig. 2. In such case, the transmit-start timing on TrCH#1 is delayed (delay time = Δt) until timing T1 of the maximum TTI (= 40 ms), after which the data is multiplexed with the data on TrCH#2 and transmitted n × 32/M (= n × 8) bits at a time every TTI = 10 ms (i.e., frame by frame). If this arrangement is adopted, ① during the initial maximum TTI (= 40 ms), m × 1 bits of data are transmitted m/4 bits at a time frame by frame only on TrCH#2, and therefore the TFCIs in each of the frames become identical, e.g., TFCI = 1. ② In the next maximum TTI (= 40 ms), n × 32 bits of data are multiplexed and transmitted n × 8 bits at a time frame by frame on TrCH#1, and m × 1 bits of data are multiplexed and transmitted m/4 bits at a time frame by frame on TrCH#2. As a result, the TFCIs in each frame become identical, e.g., TFCI = 9.

The foregoing relates to a case where the number of data bits transmitted on TrCH#1 of TTI = 10 ms has been divided by M (= maximum TTI/10 ms). However, there are cases where the number of data bits cannot be divided. In such cases, n × 8 bit-dummy data the number of items of which is equivalent to the shortfall is introduced so as to make division possible, and a dummy flag indicative of the fact that this data is dummy data is raised at a MAC header position appended by a higher layer. For example, on TrCH#2 of the TTI (= 40 ms), as illustrated at (B) of Fig. 2, assume that m × 2 bits of data are transmitted m × 1 at a time every 40 ms (i.e., m/4 bits at a time every frame), and assume that a request to transmit n × 33 bits of data on TrCH#1 of TTI = 10 ms has been issued at T_{A} in the course of the initial TTI (= 40 ms).

If the number of data bits n × 33 transmitted on TrCH#1 is divided by M (= 4), the remainder is n × 1. Accordingly, the transmit data is separated into 4 × (n × 8) + (n × 1), three sets of dummy data of (n × 1) bits each are created and a dummy flag is raised in the MAC header.

Next, the transmit-start timing on TrCH#1 is delayed until timing T1 of the maximum TTI (= 40 ms), after which the data on TrCH#1 is multiplexed with the data on TrCH#2 and transmitted n × 8 bits at a time frame by frame. When the timing becomes timing T2 of the maximum TTI (= 40 ms), the final n × 1 bits of data are transmitted on TrCH#1, then three sets of (n × 1)-bit dummy data are transmitted on TrCH#1.

If the above arrangement is adopted, ① in the initial maximum TTI (= 40 ms), m × 1 bits of data are transmitted only on TrCH#2, and therefore the TFCIs in each of the frames become identical, e.g., TFCI = 1. ② In the next maximum TTI (= 40 ms), n × 32 bits of data are multiplexed and transmitted n × 8 bits at a time frame by frame on TrCH#1, and m × 1 bits of data are multiplexed and transmitted m/4 bits at a time frame by frame on TrCH#2. As a result, the TFCIs in each frame become identical, e.g., TFCI = 9. ③ In the next maximum TTI (= 40 ms), n × 1 bits at a time are transmitted frame by frame only on TrCH#1 and therefore the TFCIs in each of the frames become identical, e.g., TFCI = 2. As a result, even in a case where a TFCI cannot be decoded correctly owing to a transmission error or the like, the correct TFCI can be detected by majority rule. This makes it possible to reduce reception errors because the data on each TrCH can be decoded correctly.

### (B) Embodiment

Fig. 3 is a diagram illustrating the principal part of a mobile station according to the present invention. Though the modem section and radio section are omitted, overall the mobile station has a structure identical with that of Fig. 3.

Dedicated traffic information (DTCH information) and dedicated control information (DCCH information) that has been transmitted from a plurality of TAF units 11a to 11n and a higher application 12 upon being mapped to a prescribed logical channel is compiled in a TAF IF (data demultiplexer/combiner) 13, which performs data demultiplexing and combining, of the MAC sublayer. Information necessary for encoding processing and multiplexed transmission, such as the encoding scheme of each transport channel TrCH, the transmission time interval TTI of each TrCH, the transmission format information TF of each TrCH and the correspondence table of correspondence between CTFC and TFCI, are reported to the TAF IF 3 from the higher layer when the dedicated physical channel DPCH is open.

A TFCI decision unit 13a of the TAF IF 3 obtains a transport channel (TrCH) that corresponds to each logical channel, identifies the maximum transmission time interval (MAX TTI) for which the transmission time interval of the TrCH is largest and exercises control in such a manner that the TFCIs of all frames in the maximum transmission time interval become the same value.

Figs. 4 to 7 are diagrams for describing control whereby all frames in the maximum transmission time interval are made identical in value. Fig. 4 illustrates an example of transmission format information TF in a case where dedicated traffic information (DTCH data) and dedicated control information (DCCH data) are multiplexed and transmitted on TrCH#1, TrCH#2. The TTI of TrCH#1 is 10 ms and the TTI of TrCH#2 is 40 ms. Candidates of bit-length (bit-rate) per TTI (= 10 ms) on TrCH#1 for DTCH are of five types (0 to 4), the respective bit lengths are n × 0 bits, n × 1 bits, n × 2 bits, n × 4 bits and n × 8 bits, and the TFIs (Transmission Format Indicators) are 0, 1, 2, 3, and 4, respectively. Further, candidates of bit-length per TTI (= 40 ms) on TrCH#2 for DCCH are of two types (0 and 1), the respective bit lengths are m × 0 bits, m × 1 bits, and the TFIs are 0 and 1, respectively.

Combinations of bit lengths per TTI on TrCH#1, TrCH#2 are 10 (= 5 × 2) in total, as shown in Fig. 5, and a TFCI (Transmission Format Combination Indicator) corresponds to each combination.

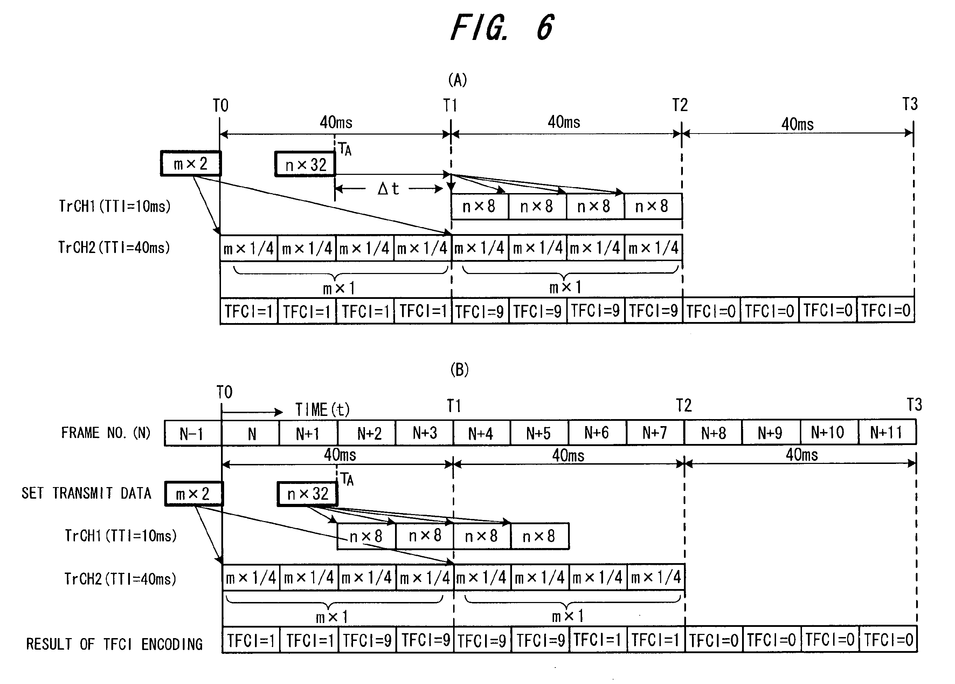

In a case where the length of transmit data on TrCH#2 is m × 2, the transmit-data length every TTI (= 40 ms) becomes m × 1 (TFI = 2), transmission takes 80 ms, as illustrated at (A) of Fig. 6, and the transmit-data length in each frame becomes m × 1/4.

Assume that a request to transmit n × 32 bits of data on TrCH#1 of TTI = 10 ms has been issued at time T_{A}, which follows the start of transmission of the transmit data on TrCH#2 of TTI = 40 ms at the illustrated timing. Of TrCH#1, TrCH#2, the maximum transmission time interval (maximum TTI) is 40 ms and the number N (= maximum TTI/10 ms) of frames in the maximum TTI is four.

First, TrCH#1 TFI of TrCH#1 is decided in such a manner that the transmit-data lengths will become the same in the four (= 40 ms/10 ms) frames within the maximum TTI. In this case, it is also necessary to decide TFI in such a manner that the data can be transmitted most efficiently. Accordingly, whether n × 8, which is the quotient obtained when n × 32 is divided by N (= 4), exists in the transmission format information TF as a candidate for transmit-data length is investigated. Since the transmit bit length per TTI of TFI = 4 is n × 8, it is decided that the TFI of TrCH#1 is 4.

Next, as indicated at (A) of Fig. 6, the transmit-start timing on TrCH#1 is delayed (delay time = Δt) until timing T1 of the maximum TTI (= 40 ms), after which the data is multiplexed with the data on TrCH#2 and transmitted n × 8 bits at a time frame by frame of TTI = 10 ms. As a result, the transmit data lengths of the four frames in the maximum TTI can all be made n × 8 per TTI (= 10 ms). Moreover, the data can be transmitted efficiently.

If the above arrangement is adopted, ① in the initial maximum TTI (= 40 ms), m × 1 bits of data are transmitted m/4 bits at a time frame by frame only on TrCH#2, and therefore the TFCIs in each of the frames become identical, e.g., TFCI = 1. ② In the next maximum TTI (= 40 ms), n × 32 bits of data are multiplexed and transmitted n × 8 bits at a time frame by frame on TrCH#1, and m × 1 bits of data are multiplexed and transmitted m/4 bits at a time frame by frame on TrCH#2. As a result, the TFCIs in each frame on TrCH#2 become identical, e.g., TFCI = 9. ③ in the maximum TTIs (= 40 ms) that follow, data is not transmitted on TrCH#1, TrCH#2 and therefore the TFCIs becomes the same, namely TFCI = 0.

In the conventional scheme at (B) of Fig. 6, data starts to be transmitted immediately without delaying the transmit-start timing on TrCH#1. As a consequence, the TFCIs no longer agree in all frames within the maximum TTI, as illustrated.

The foregoing relates to a case where the number of data bits transmitted on TrCH#1 of TTI = 10 ms has been divided by N (= maximum TTI/10 ms). However, there are cases where the number of data bits cannot be divided. In such cases, n × 8 bit-dummy data the number of items of which is equivalent to the shortfall is introduced so as to make division possible, and a dummy flag indicative of the fact that this data is dummy data is raised at a MAC header position appended by a higher layer.

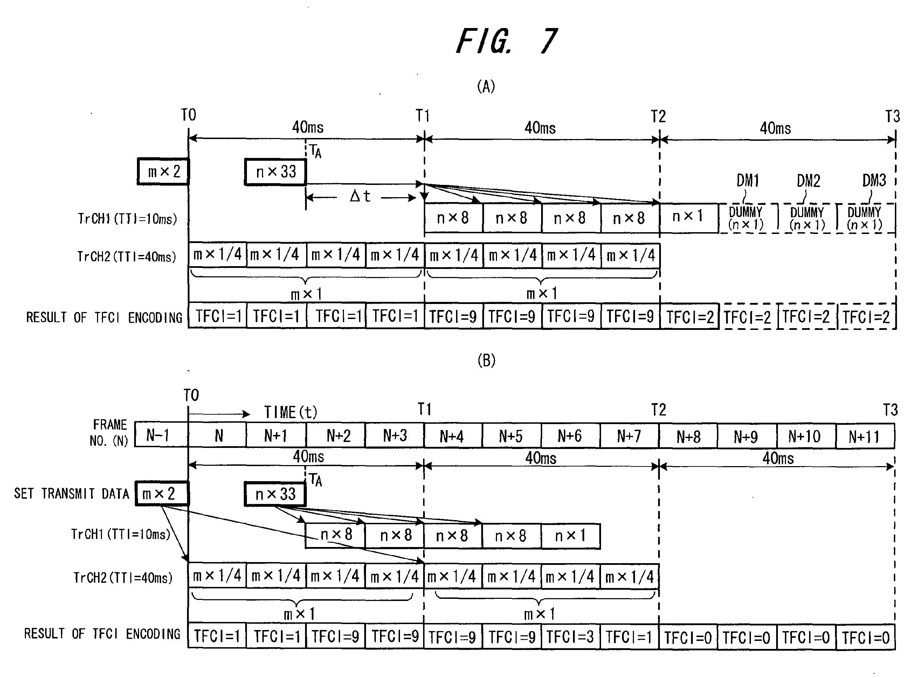

For example, as illustrated at (A) of Fig. 7, assume that a request to transmit n × 33 bits of data on TrCH#1 of TTI = 10 ms has been issued at time T_{A}, which follows the start of transmission of the transmit data on TrCH#2. Of TrCH#1, TrCH#2, the maximum transmission time interval (maximum TTI) is 40 ms and the number N (= maximum TTI/10 ms) of frames in the maximum TTI is four.

First, if the number of data bits n × 33 transmitted on TrCH#1 is divided by N (= 4), the remainder is n × 1. Accordingly, the transmit data is decomposed into 4 × (n × 8) + (n × 1), three sets of dummy data of (n × 1) bits each are created and a dummy flag is raised in the MAC header.

Next, the transmit-start timing on TrCH#1 is delayed (delay time Δt) until timing T1 of the maximum TTI (= 40 ms), after which the data on TrCH#1 is multiplexed with the data on TrCH#2 and transmitted n × 8 bits at a time frame by frame. When the timing becomes timing T2 of the maximum TTI (= 40 ms), the final n × 1 bits of data are transmitted, then three sets of (n × 1)-bit dummy data DM1, DM2, DM3 are transmitted. Furthermore, the receiving side determines whether data is dummy data and eliminates data for which the dummy flag has been raised.

If the above arrangement is adopted, ① in the initial maximum TTI (= 40 ms), m × 1 bits of data are transmitted only on TrCH#2, and therefore the TFCIs in each of the frames become identical, e.g., TFCI = 1. ② In the next maximum TTI (= 40 ms), n × 32 bits of data are multiplexed and transmitted n × 8 bits at a time frame by frame on TrCH#1, and m × 1 bits of data are multiplexed and transmitted m/4 bits at a time frame by frame on TrCH#2. As a result, the TFCIs in each frame become identical, e.g., TFCI = 9. ③ During the next maximum TTI (= 40 ms), n × 1 bits at a time are transmitted frame by frame only on TrCH#1 and therefore the TFCIs in each of the frames become identical, e.g., TFCI = 2.

In the conventional scheme at (B) of Fig. 7, data starts to be transmitted immediately without delaying the transmit-start timing on TrCH#1. As a consequence, the TFCIs no longer agree in all frames within the maximum TTI, as illustrated.

With reference again to Fig. 3, the TFCI decision unit 13a inputs the decided TFCI, transmit-start timing information and dummy-data insertion timing information to a controller 21 in a channel codec 14 on the transmitting side, and inputs the transmit data length (TFI data) per TTI of each TrCH to a data demultiplexer 13b.

The data demultiplexer 13b checks the TrCH corresponding to each logical channel by referring to information reported from the higher layer when the dedicated physical channel is open. Thereafter, based upon TFI (data length on a per-TTI basis) specified by the TFCI decision unit 13a, the data demultiplexer 13b segments the transmit data, which enters from each logical channel, into data lengths on a per-TTI basis and inputs these via the prescribed TrCH to a corresponding transmit buffer 22 within the channel codec 14 on the transmitting side. The components enclosed by the dashed line are provided for every TrCH.

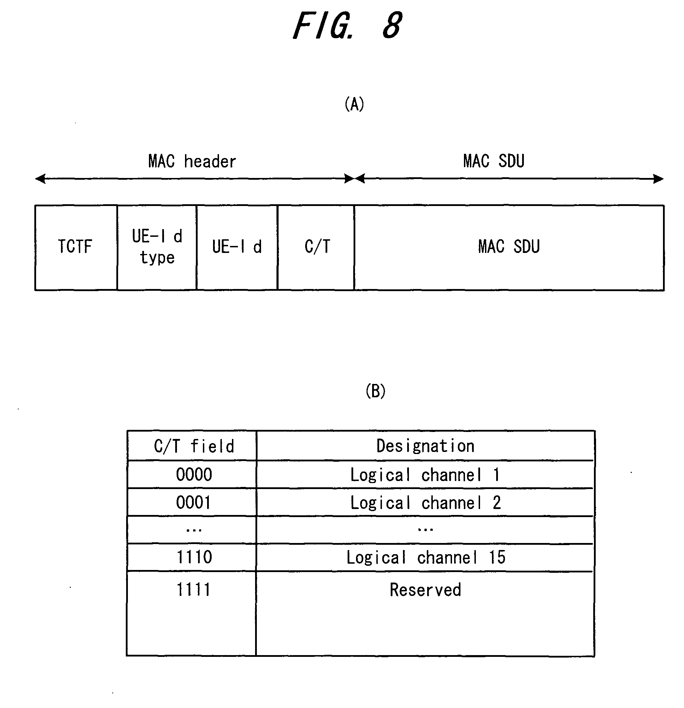

On the basis of the transmit-start timing information that has entered from the TFCI decision unit 13a, the controller 21 exercises control to start operation by synchronizing the timing at which data is read out of the transmit buffer 22 to the timing of the first frame in the maximum TTI. A transport block segmentation unit (TrBLK segmentation unit) 23 segments transmit data, which has been read out of the transmit buffer 22, into individual blocks TrBLK and inputs the blocks to a CRC attaching unit 24. On the basis of dummy-data insertion control information that enters from the TFCI decision unit 13a, the controller 21 instructs a dummy-data insertion unit 25' to generate dummy blocks the number of which corresponds to one frame at a prescribed frame timing. In response, the dummy-data insertion unit 25' generates dummy blocks the number of which corresponds to the frame data length and inserts them at the tail end of the transmit data at the specified frame timing. A flag indicating that the block is a dummy block is raised in the MAC headers of the dummy blocks. As indicated at (A) of Fig. 8, a MAC DATA PDU (Protocol Data Unit), which is a transport block, is composed of a MAC header and a MAC SDU (Service Data Unit). The MAC header has a C/T field. As illustrated at (B) of Fig. 8, "0000" to "1110" in the C/T field information are used to identify logical channels of the dedicated transport channel, but "1111" is defined as "Reserved". Here "1111" is defined as a flag indicative of dummy data.

The CRC attaching unit 24 attaches a CRC code (CRC Attachment) block by block, and a block concatenation unit 25 concatenates (TrBLK concatenation) transport blocks to which the CRC has been attached. The channel codec 14 on the transmitting side thenceforth executes ① error-correcting encoding processing 26 based upon an encoding method (turbo encoding and convolutional encoding) specified from the higher layer, ② radio frame equalization processing 27, ③ first interleave processing 28, ④ radio frame segmentation processing 29 and ⑤ rate matching processing 30. The channel codec 14 on the transmitting side subsequently ⑥ executes multiplex processing (TrCH Multiplexing) 31 of transmit data on each TrCH, ⑦ physical channel segmentation processing 32, ⑧ second interleave processing 33 and ⑨ physical channel mapping processing 34 in the order mentioned, and inputs the result to a modulator (MOD) as data of the DPDCH (Dedicated Physical Data Channel).

A DPCCH creation unit 35 in the channel codec 14 on the transmitting side maps control data such as a PILOT, TFCI and FBI to the dedicated physical control channel DPCCH and inputs the result to the modulator (MOD). The TFCI is encoded to a TFCI Code Word based upon a Read Muller Encode scheme, which has been defined by 3GPP, and is mapped to the dedicated physical control channel DPCCH. Further, a TPC (Transmission Power Control) bit is mapped to the DPCCH in closed-loop power control of the modulator MOD.

A channel codec 15 on the receiving side executes second deinterleave processing 51 with regard to received multiplexed data, processing 42 for storing received data in an amount equivalent to the maximum TTI, and processing 43 for demultiplexing and concatenating multiplexed data on a per-TrCH basis. Next, the channel codec 15 on the receiving side executes, on a per-TrCH basis, first deinterleave processing 44, rate dematching processing 45, error-correcting decoding processing (convolutional decoding processing or turbo decoding processing) 46, and decoded-data block segmentation processing 47 and CRC check processing 48. Finally, a dummy-data identifying/discarding unit 49 refers to the MAC header of each block to determine whether a dummy flag has been raised. In actuality, the discarding unit 49 determines whether the C/T field information is "1111" . If a dummy flag has been raised, then the block is a dummy block and therefore the discarding unit 49 discards this block. If the flag has not been raised, then the discarding unit 49 stores the block data in a receive buffer 50 and successively inputs the data to the TAF-IF 13. The dashed line encloses processing executed by each TrCH.

A TFCI discriminator 61 receives a TFCI Code Word from a demodulator (DEM) and decides the TFCI in each frame by a method described later. Further, using this TFCI as well as the transmission format information TF of each TrCH and the CTFC - TFCI correspondence table, etc., that enter from the controller 62, the TFCI discriminator 61 obtains the data bit length every TTI on each TrCh and inputs this to a TrCH demultiplexing/concatenating unit 43. The latter demultiplexes the multiplexed data on a per-TrCH basis based upon the data bit length every TTI of each TrCH.

The controller 62 is notified by the TAF-IF 13 of information necessary for encoding processing and demultiplexing, such information being the encoding scheme of each transport channel TrCH, the transmission time interval TTI of each TrCH, the transmission format information TF of each TrCH and the CTFC - TFCI correspondence table, etc., and therefore the controller uses this information to control the overall channel codec 15 on the receiving side.

### (C) TFCI decision processing and multiplexed-data demultiplexing processing

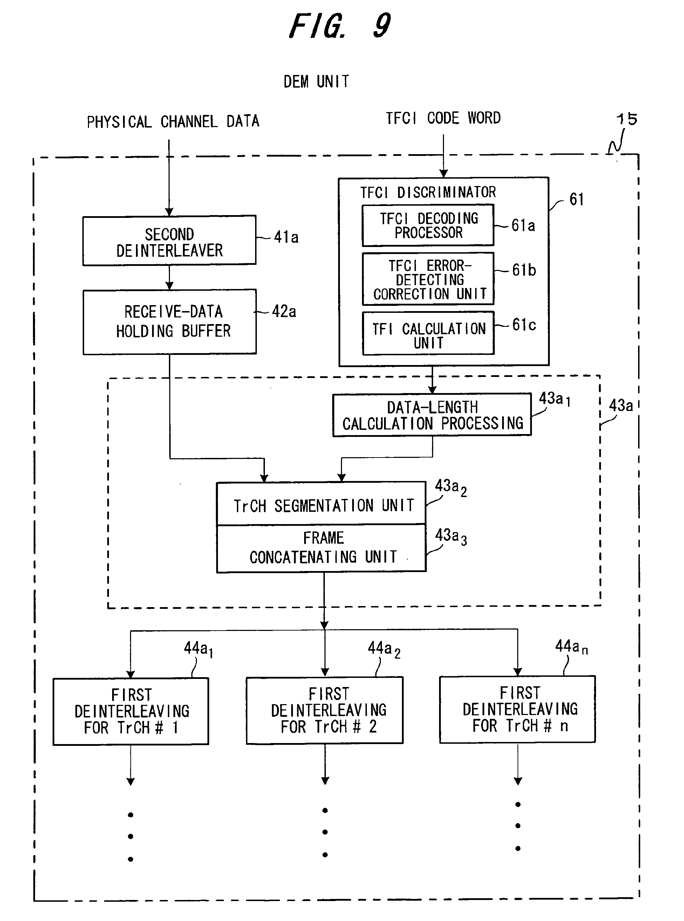

Fig. 9 is a diagram useful in describing operation of the TFCI decision unit and multiplexed-data demultiplexing/concatenating unit in the codec on the receiving side according to the present invention.

The channel codec 15 on the receiving side receives physical channel data (multiplexed data) and a TFCI Code Word from the DEM unit. A second deinterleaver 41a applies second deinterleave processing to the physical channel data received and stores the result in a receive-data holding buffer 42a. The buffer 42a is required to have an area capable of holding data at least in an amount equivalent to the maximum transmission time interval TTI (= 80 ms). A TFCI decoding processor 61a in the TFCI discriminator 61 decodes the TFCI Code Word, which was received at the same time as the multiplexed data, on a per-frame basis as by Hadamard transform processing. A TFCI error-detecting correction unit 61b compares the decoded TFCI with the decoded TFCIs of all frames in the maximum TTI, decides that this decoded TFCI is the TFCI of all frames if it agrees with the TFCIs, and decides that the most numerous decoded TFCI is the TFCI of all frames by majority rule if the decoded TFCI is different. A TFI calculation unit 61c finds the CTFC by referring to a CTFC - TFCI table, calculates the TFI of each TrCH by a known calculation equation and reports this to a TrCH segmenting/demultiplexing unit 43a.

A data-length calculating unit 43a₁ in the TrCH segmenting/demultiplexing unit 43a calculates the data length per frame (segmented data length, etc., on the physical channel) of each TrCH by referring to the transmission format information TF (TFI table) based upon the TFI reported. Based upon the result of calculation of data length, a TrCH segmentation unit 43a₂ segments the physical channel data (multiplexed data), which is being held in the buffer 42a, on a per-TrCH basis. A frame concatenating unit 43a₃ concatenates frame data, in an amount equivalent to the transmission time interval TTI, on a per-TrCH basis and inputs the concatenated data to primary deinterleavers 44a₁ to 44aₙ, whereby first deinterleave processing is executed on a per-TrCH basis.

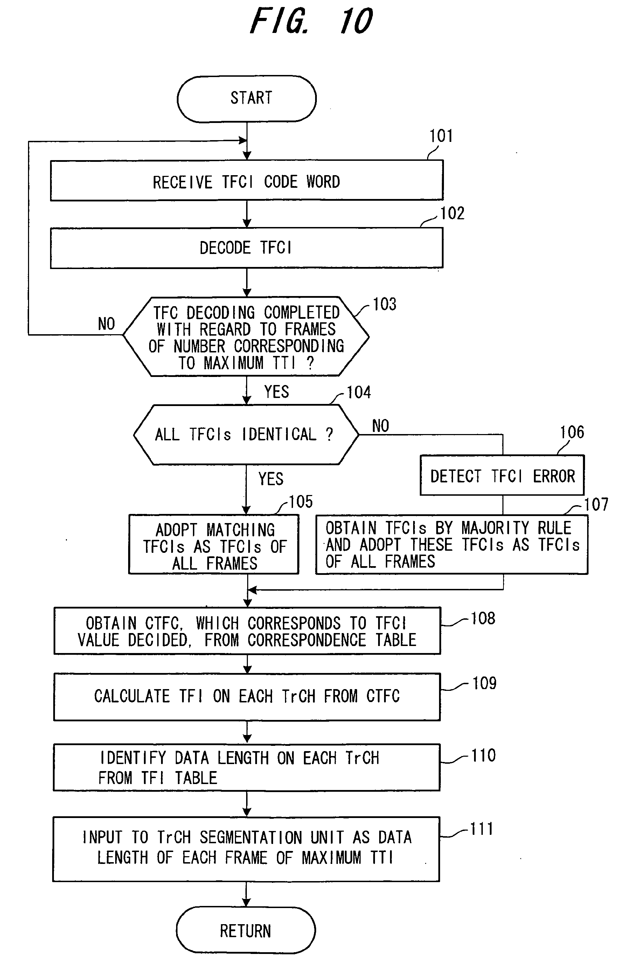

Fig. 10 is a flowchart of processing executed by the TFCI discriminator 61.

The TFCI discriminator 61 decodes and stores the TFCI whenever a TFCI Code Word is received (steps 101, 102). The TFCI discriminator 61 thenceforth checks to determine whether the TFCI decoding operation has been completed with regard to all frames in the maximum TTI (step 103) and repeats the above-described decoding operation until the operation is completed.

If the decoding of all frames in the maximum TTI is completed, then the TFCI discriminator 61 checks to determine whether the stored decoded TFCIs of all frames in the maximum TTI agree (step 104). If agreement is determined, then the TFCI discriminator 61 decides that the decoded TFCIs are the TFCIs of all frames (step 105). If non-agreement is determined, then the TFCI discriminator 61 decides that there is a decoded TFCI that is erroneous (step 106) and decides that the most numerous decoded TFCIs are the TFCIs of all frames based upon majority rule (step 107).

Next, the TFCI discriminator 61 refers to the CTFC - TFCI table to obtain the CTFC corresponding to the TFCI (step 108), calculates the TFI of each TrCH by a known calculation equation and reports this to the data-length calculating unit 43a₁ (step 109). On the basis of the TFI of each TrCH reported, the data-length calculating unit 43a₁ obtains the data length per frame of each TrCH from the transmission format information TF (TFI table) (step 110) and inputs the data length of each TrCH to the TrCH segmentation unit 43a₂.

### (D) Processing for discarding dummy data

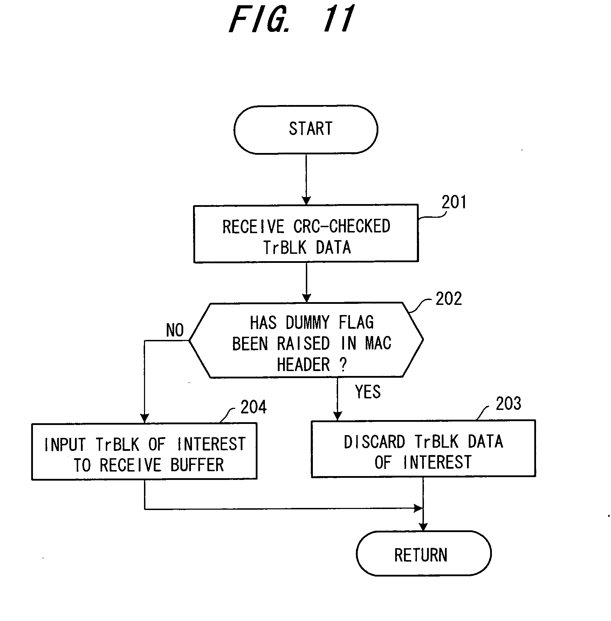

Fig. 11 is a flowchart of processing for discarding dummy data executed by the dummy-data identifying/discarding unit 49 of the channel codec 15 on the receiving side.

Whenever CRC-checked transport block (TrBLK) data is received (step 201), the dummy-data identifying/discarding unit 49 refers to the T/C field of the MAC header of the TrBLK data and checks to determine whether a dummy flag has been raised (step 202). If the dummy flag has been raised, then the block is a dummy block and is discarded (step 203). If the flag has not been raised, then the block is a normal transport block (TrBLK) and therefore the block is stored in the receive buffer 50, which is the next stage.

The foregoing relates to a case where two TrCHs are multiplexed. As a matter of course, however, the present invention is also applicable to a case where three or more TrCHs are multiplexed.

Thus, in accordance with the present invention, it is possible to so arrange it that even in a case where a TFCI cannot be decoded correctly owing to a transmission error or the like, a correct TFCI can be detected, thereby making it possible to decode the data of each TrCH correctly and reduce reception error.

## Claims

1. A transmitting apparatus in a communication system for multiplexing and transmitting frame data of a plurality of channels, **characterized by** comprising:
a multiplexer for segmenting transmit data of every transmission time interval on each channel frame by frame and multiplexing the frame data on each channel;
a transmitting unit for transmitting identification information, which specifies a combination of frame data lengths on each channel, together with said multiplexed data frame by frame; and
identification-information identifying means for making said identification information in all frames in a maximum transmission time interval identical.

2. A transmitting apparatus according to claim 1,
**characterized in that** said identification-information
identifying means has:
means for making transmit-start timing of frame data on a channel in which the transmission time interval is shorter than the maximum transmission time interval coincide with initial frame-transmit timing in said maximum transmission time interval; and
means for making data lengths of all frames in the maximum transmission time interval identical on each of the channels.

3. A transmitting apparatus according to claim 1,
**characterized in that** said identification-information identifying means has dummy-data insertion means which, if the data lengths of all frames in the maximum transmission time interval cannot be made identical on any channel and data to be transmitted does not exist in one or more frames, is for inserting dummy data into said frames to thereby make the data lengths of all frames in the maximum transmission time interval identical.

4. A receiving apparatus in a communication system for segmenting transmit data of every transmission time interval on each channel at a frame period to obtain frame data, multiplexing and transmitting the frame data on each channel and transmitting, frame by frame, identification information that specifies a combination of frame data lengths on each channel, said receiving apparatus
**characterized by** comprising:
a storage unit for storing multiplexed data received;
an identification-information discriminator which, if reception identification information of all frames in a maximum transmission time interval is identical, is for deciding that said reception identification information is identification information that has been transmitted from a transmitting side, and which, if the reception identification information of all frames is not identical, is for deciding by majority rule that most numerous reception identification information is identification information that has been transmitted from the transmitting side; and
a demultiplexer for identifying the frame data length on each channel based upon the identification information decided, and demultiplexing the multiplexed data, which has been stored in said storage unit, channel by channel based upon said frame data length.

5. A receiving apparatus according to claim 4,
**characterized by** further comprising a dummy-data discarding unit for determining, channel by channel, whether said demultiplexed frame data is dummy data and discarding the frame data if it is dummy data.

6. A method of transmitting multiplexed data in a communication system for multiplexing and transmitting frame data on a plurality of channels, **characterized by**:
segmenting transmit data of every transmission time interval in each channel frame by frame and multiplexing the frame data on each channel;
making identification information, which specifies a combination of frame data lengths on each channel, identical in all frames in a maximum transmission time interval; and
transmitting said identification information together with said multiplexed data frame by frame.

7. A method of transmitting multiplexed data according to claim 6, **characterized by**:
making transmit-start timing of frame data on a channel in which the transmission time interval is shorter than the maximum transmission time interval coincide with initial frame-transmit timing in said maximum transmission time interval; and
making data lengths of all frames in the maximum transmission time interval identical on each of the channels;
whereby said identification information is made identical in all frames in the maximum transmission time interval.

8. A method of transmitting multiplexed data according to claim 7, **characterized in that** if the data lengths of all frames in the maximum transmission time interval cannot be made identical on any channel and data to be transmitted does not exist in one or more frames, then inserting dummy data into said frames to thereby make the data lengths of all frames in the maximum transmission time interval identical.

9. A method of receiving multiplexed data in a communication system for segmenting transmit data of every transmission time interval on each channel at a frame period to obtain frame data, multiplexing and transmitting the frame data on each channel and transmitting, frame by frame, identification information that specifies a combination of frame data lengths on each channel, **characterized by**:
storing multiplexed data received in a storage unit;
performing monitoring to determine whether reception identification information of all frames in a maximum transmission time interval is identical;
deciding that said reception identification information is identification information, which has been transmitted from a transmitting side, if the reception identification information of all frames is identical;
deciding by majority rule that most numerous reception identification information is identification information, which has been transmitted from the transmitting side, if the reception identification information of all frames is not identical;
identifying the frame data length on each channel based upon the identification information decided; and
demultiplexing the demultiplexed data, which has been stored in said storage unit, channel by channel based upon the frame data length.

10. A method of receiving multiplexed data according to claim 9, **characterized by** determining, channel by channel, whether said demultiplexed frame data is dummy data and discarding the frame data if it is dummy data.

11. A communication system for multiplexing frame data on a plurality of channels from a transmitting apparatus and transmitting the frame data to a receiving apparatus,
**characterized in that**:
said transmitting apparatus has:
a multiplexer for segmenting transmit data of every transmission time interval on each channel frame by frame and multiplexing the frame data on each channel;
a transmitting unit for transmitting identification information, which specifies a combination of frame data lengths on each channel, together with said multiplexed data frame by frame; and
identification-information identifying means for making said identification information in all frames in a maximum transmission time interval identical; and
said receiving apparatus has:
a storage unit for storing multiplexed data received;
an identification-information discriminator which, if reception identification information of all frames in a maximum transmission time interval is identical, is for deciding that said reception identification information is identification information that has been transmitted from a transmitting side, and which, if the reception identification information of all frames is not identical, is for deciding by majority rule that most numerous reception identification information is identification information that has been transmitted from the transmitting side; and
a demultiplexer for identifying the frame data length on each channel based upon the identification information decided, and demultiplexing the multiplexed data, which has been stored in said storage unit, channel by channel based upon said frame data length.

12. A communication system according to claim 11, **characterized in that** said identification-information identifying means has:
means for making transmit-start timing of frame data on a channel in which the transmission time interval is shorter than the maximum transmission time interval coincide with initial frame-transmit timing in said maximum transmission time interval; and
means for making data lengths of all frames in the maximum transmission time interval identical on each of the channels.

13. A communication system according to claim 12, **characterized in that** said identification-information identifying means has dummy-data insertion means which, if the data lengths of all frames in the maximum transmission time interval cannot be made identical on any channel and data to be transmitted does not exist in one or more frames, is for inserting dummy data into said frames to thereby make the data lengths of all frames in the maximum transmission time interval identical.

14. A communication system according to claim 13, **characterized in that** said receiving apparatus has a dummy-data discarding unit for determining, channel by channel, whether said demultiplexed frame data is dummy data and discarding the frame data if it is dummy data.
